# EUROPEAN PATENT APPLICATION

(11) **EP 0 669 403 A2**
(43) Date of publication of application: **30.08.1995**
(21) Application number: 94308755.1
(22) Date of filing: 28.11.1994
(51) Int. Cl.: C22C 19/05, C22F 1/10, F01D 5/14, C30B 29/52

(54) **Gas turbine blade alloy**

(30) Priority: 03.12.1993 US 161027
(71) Applicant: WESTINGHOUSE ELECTRIC CORPORATION, Pittsburgh Pennsylvania 15222 (US)
(72) Inventor: Pessall, Neil, Monroeville, Pennsylvania 15146 (US); Burke, Michael Anthony, Pittsburgh, Pennsylvania 15213 (US)
(74) Representative: van Berlyn, Ronald Gilbert

(57) **Abstract**

A nickel based alloy suitable for casting into a single crystal structure and for use in making gas turbine components, such as rotating blades, is provided. A first series of alloy compositions in accordance with the present invention comprises the following range of elements, in weight percent: aluminum 3.4 to 4.0, titanium 3.0 to 4.7, tantalum 0.8 to 2.0, chromium 13.75 to 15.5, cobalt 8.0 to 8.5, niobium up to 1.0, tungsten 2.0 to 4.5, molybdenum 0.1 to 2.0, and the balance nickel. A second series of alloy compositions in accordance with the present invention comprises the following range of elements, in weight percent: aluminum 4.7 to 5.3, titanium 1.8 to 3.0, chromium 15.2 to 16.3, cobalt 6.4 to 8.75, niobium 0.75 to 4.0, and the balance nickel. A further alloy composition in accordance with the present invention comprises the following elements, in weight percent: aluminum 4.24, titanium 2.8, chromium 15.3, cobalt 4.6, niobium 3.0, tungsten 4.05, molybdenum 0.15, and the balance nickel.

## Description

The present invention relates generally to nickel-based superalloys. More particularly, this invention relates to nickel-based alloys which are fabricated into a single crystal structure and have a sufficiently high chromium content such that the alloy is suitable for applications such as rotating blades in the turbine section of a gas turbine.

A gas turbine employs a plurality of rotating blades in its turbine section. These blades are exposed to gas at temperatures in excess of 1100°C (2000°F) and subjected to high stress. Consequently, the alloys from which such blades are cast must, after suitable heat treatment, have very high stress rupture strength and sufficient metallurgical stability to maintain this strength for many thousands of hours of operation. Such alloys must also have sufficient ductility to withstand the large thermal stresses imposed on turbine blades. In addition, as a result of impurities in the fuel and combustion air in the turbine, the gases to which the blades are exposed contain corrosive compounds, such as sulfides and chlorides. Consequently, blade alloys must also have sufficient high temperature corrosion resistance, as well as oxidation resistance.

The strength of the alloy is increased by adding strengthening elements to the nickel base, such as aluminum, titanium and tantalum. The alloy composition must comprise increased volume fractions of the gamma prime strengthening phase to provide a gamma prime volume fraction between about 35-60%. The alloy compositions must also be formulated to provide long term stability with respect to sigma phase formation and gamma prime coarsening, known as rafting. However, as is discussed further below, an improvement in some of the desired properties of such an alloy leads to an attendant decrease in other desired properties, such that a balance must be attained and the composition must be closely controlled to provide an alloy which delivers optimum performance.

Generally, it is known that high temperature corrosion resistance is provided by the incorporation of substantial amounts of chromium into turbine blade alloys. High chromium content inhibits the basic fluxing of the alloy by forming a continuous chromia scale that is not susceptible to solution and reprecipitation from a Na₂SO₄ melt, thereby providing an effective barrier for the alloy. Moreover, chromium combines with sulfur to form high melting point sulfides, thereby inhibiting degradation due to sulfidation. It is generally understood that a chromium level of about 14-16% is desirable for good high temperature corrosion resistance. Also, in order to improve the hot corrosion resistance of the alloy, the levels of molybdenum (Mo) and tungsten (W) should be low. Furthermore, substitution of niobium (Nb) (aka columbium) for molybdenum and tungsten further improves the hot corrosion resistance of the alloy, as the acid fluxing of the subsurface oxides that is promoted by MoO₃ and WO₃ is reduced.

One nickel-based alloy, used with some success for a number of years in gas turbine blades, is manufactured by the International Nickel Company and known commercially as IN-738. IN-738 is a conventional polycrystaline cast alloy. A typical composition of IN-738 in weight percent, as published in the American Society of Metals Handbook, 9th ed., volume 4, page 244, is as follows: Nickel 61, Chromium 16.0, Cobalt 8.5, Molybdenum 1.7, Tungsten 2.6, Tantalum 1.7, Niobium (aka Columbium) 0.9, Aluminum 3.4, Titanium 3.4, Carbon .17, Boron 0.01, and Zirconium 0.10. In addition, the manufacturer recommends that the electron vacancy number for this alloy not exceed 2.36. This alloy is disclosed in U.S Patent No. 3,459,545 (Bleber).

It is known that directional solidification, whereby a uniaxial grain structure is produced, increases both the ability to withstand cyclical thermal stress and the stress rupture strength of many nickel-based alloys. For example, U.S. Patent No. 4,519,979 (Shaw) discloses that directional solidification of an alloy known commercially as IN-939 and having a composition in weight percent of Carbon 0.15, Chromium 22.5, Cobalt 19, Tungsten 2, Titanium 3.7, Aluminum 1.9, Tantalum 1.4, Niobium 1.0, Zirconium 0.1, Boron 0.01 and the balance Nickel, increased the stress rupture life of the alloy from about 850 hours to 1370 hours at 870°C and 200 N/mm². Thus, directionally solidified alloys marked an improvement in nickel-based superalloys as compared to conventional alloys, such as IN-738. However, since directionally solidified alloys comprise aligned grain boundaries, they are susceptible to mechanical deformation at very high temperatures due to sliding of the grain boundaries. Thus, the capability for grain boundary sliding in the very high temperature regime limits the improvement in the high temperature mechanical properties of directionally solidified alloys compared to conventional polycrystaline cast alloys.

The development of single crystal casting techniques has further improved the high temperature/high strength mechanical properties and performance of nickel-based superalloys. Like directionally solidified alloys, these single crystal alloys are controlled to provide a high volume fraction gamma prime in order to deliver optimum high temperature strength. However, the elimination of the grain boundaries in a single crystal alloy provides for use of such alloys at the high temperature regime where directionally solidified and conventional alloys would be susceptible to mechanical deformation due to grain boundary sliding. Moreover, the elimination of grain boundaries allows for the elimination of certain elements from the alloy composition, such as carbides and borides, which are necessary as grain boundary strengthening phases for directionally solidified and conventional alloys.

Nickel-based alloys suitable for casting as single crystal alloys have been used to fabricate blades for aircraft gas turbine engines -- see, for example, Hoppin, G.S. & Danesi, W.P., "Manufacturing Processes for Long-Life Gas Turbines" Journal of Metals, July 1986, pp. 20-23. The development of single crystal materials has produced aircraft engine blade materials with approximately 100C degrees (200 F. degrees) increase in metal temperature capability compared to prior alloys. However, the composition of these alloys is not suitable for applications in land-based gas turbines, as these alloys lack sufficient levels of the elements, primarily chromium, necessary to provide resistance to hot corrosion attack.

Accordingly, there is a need for a turbine blade alloy that has high strength when cast as a single crystal alloy and which also provides adequate hot corrosion resistance such that the alloy is suitable for the rotating blades of land-based gas turbine systems.

The present invention provides a nickel-based alloy suitable for casting as single crystals to produce the rotating blades of a gas turbine, the blades having high stress rupture strength, good corrosion resistance, and stability during long term service. A first series of alloy compositions in accordance with the present invention comprises the following range of elements, in weight percent: aluminum 3.4 to 4.0, titanium 3.0 to 4.7, tantalum 0.8 to 2.0, chromium 13.75 to 15.5, cobalt 8.0 to 8.5, niobium up to 1.0, tungsten 2.0 to 4.5, molybdenum 0.1 to 2.0, and the balance nickel. A second series of alloy compositions in accordance with the present invention comprises the following range of elements, in weight percent: aluminum 4.7 to 5.3, titanium 1.8 to 3.0, chromium 15.2 to 16.3, cobalt 6.4 to 8.75, niobium 0.75 to 4.0, and the balance nickel. A further alloy composition in accordance with the present invention comprises the following elements, in weight percent: aluminum 4.24, titanium 2.8, chromium 15.3, cobalt 4.6, niobium 3.0, tungsten 4.05, molybdenum 0.15, and the balance nickel. The alloys of the present invention may also comprise impurities and incidental elements in trace amounts which are commonly associated with nickel-based alloys.

### BRIEF DESCRIPTION OF THE DRAWINGS

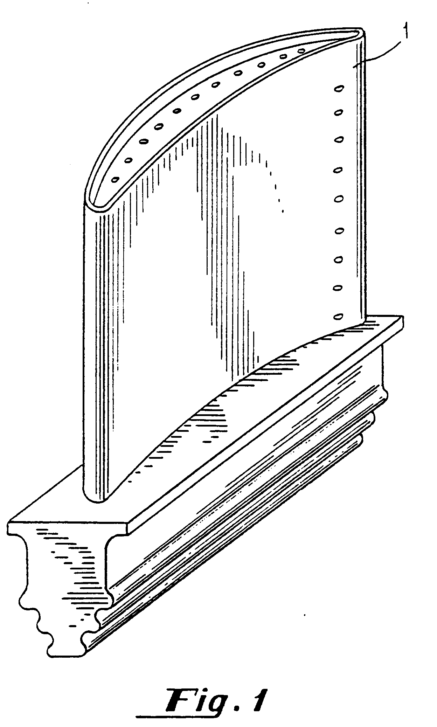

Fig. 1 shows an isometric view of a gas turbine rotating blade.

There is shown in Fig. 1 a rotating blade 1 used in the turbine section of a gas turbine. The current invention is directed to alloys, referred to as WSTC1, WSTC2, WSTC3, WSTC4, WSTC5, WSTC6, and WSTC7, from which such blades may be cast, particularly using a single crystal casting process.

Generally speaking, the current invention is directed to a first series of alloys comprising the following range of elements, in weight percent: aluminum 3.4 to 4.0, titanium 3.0 to 4.7, tantalum 0.8 to 2.0, chromium 13.75 to 15.5, cobalt 8.0 to 8.5, niobium up to 1.0, tungsten 2.0 to 4.5, molybdenum 0.1 to 2.0, and the balance nickel. A second series of alloys comprises the following range of elements, in weight percent: aluminum 4.7 to 5.3, titanium 1.8 to 3.0, chromium 15.2 to 16.3, cobalt 6.4 to 8.75, niobium 0.75 to 4.0, and the balance nickel. A further alloy composition in accordance with the present invention comprises the following elements, in weight percent: aluminum 4.24, titanium 2.8, chromium 15.3, cobalt 4.6, niobium 3.0, tungsten 4.05, molybdenum 0.15, and the balance nickel. The alloys of the current invention may also comprise impurities and incidental elements in trace amounts which are commonly associated with nickel-based alloys.

Preferably, an alloy, referred to as WSTC1, of the present invention comprises the following elements, in weight percent: aluminum about 3.9, titanium about 3.1, tantalum about 1.8, chromium about 15.4, cobalt about 8.3, tungsten about 2.4, molybdenum about 0.46, and the balance nickel.

A second preferred alloy, referred to as WSTC2, of the present invention comprises the following elements, in weight percent: aluminum about 3.4, titanium about 4.5, tantalum about 1.8, chromium about 13.91, cobalt about 8.3, niobium about 0.46, tungsten about 2.5, molybdenum about 0.86, and the balance nickel.

A third preferred alloy, referred to as WSTC3, of the present invention comprises the following elements, in weight percent: aluminum about 3.9, titanium about 3.1, tantalum about 1.94, chromium about 13.75, cobalt about 8.3, niobium about 0.45, tungsten about 4.2, molybdenum about 0.5, and the balance nickel.

A fourth preferred alloy, referred to as WSTC4, of the present invention comprises the following elements, in weight percent: aluminum about 3.5, titanium about 4.6, tantalum about 0.9, chromium about 15.2, cobalt about 8.3, niobium about 0.9, tungsten about 2.45, molybdenum about 1.64, and the balance nickel.

A fifth preferred alloy, referred to as WSTC5, of the present invention comprises the following elements, in weight percent: aluminum about 5.16, titanium about 2.54, chromium about 15.83, cobalt about 8.15, niobium about 1.7, and the balance nickel.

A sixth preferred alloy, referred to as WSTC6, of the present invention comprises the following elements, in weight percent: aluminum about 5.0, titanium about 2.25, chromium about 15.75, cobalt about 7.0, niobium about 3.15, and the balance nickel.

A seventh preferred alloy, referred to as WSTC7, of the present invention comprises the following elements, in weight percent: aluminum 4.24, titanium 2.8, chromium 15.3, cobalt 4.6, niobium 3.0, tungsten 4.05, molybdenum 0.15, and the balance nickel.

As previously discussed, both corrosion resistance and strength are important properties for blade alloys. Corrosion resistance in nickel-based alloys is provided primarily by chromium. Nickel-based alloys used for gas turbine components are strengthened by solid solution strengthening and gamma prime strengthening. Solid solution strengthening is provided by molybdenum, chromium and tungsten. Gamma prime strengthening is provided primarily by aluminum and titanium, which strengthen the austenitic matrix through the precipitation of Ni₃(Al and/or Ti), an fcc intermetallic compound. In addition, the aluminum in gamma prime can be replaced by tantalum and niobium.

Since the strength of nickel-based super alloys increases with increasing gamma prime volume fraction up to about 60%, in the alloy according to the current invention the content of aluminum, titanium, tantalum and niobium, which tend to increase the gamma prime volume fraction, has been controlled so as to achieve a high gamma prime volume fraction. The gamma prime volume fraction should generally be above 35% for alloys used in the blades of land-based gas turbine systems. However, as an increase in the level of chromium in the composition reduces the amount of gamma prime formed by the alloy, the gamma prime volume fraction is limited by the necessity for a sufficient content of chromium in the blades of land-based gas turbines so as to maintain good corrosion resistance of those blades.

The volume fraction of gamma prime, for a given alloy composition, is determined from the chemical equilibrium equations set forth in Harada, H., et al., "Design of High Specific-Strength Nickel-Based Single Crystal Superalloys", published in "High Temperature Materials for Power Engineering 1990" Kluwer Academic Publishers Dordrecht (1990) pp. 1319-1328; Harada, H., et al., "Phase Calculation and Its Use In Alloy Design Program for Nickel-Base Superalloys", published in "Superalloys 1988" TMS-AIME Warrendale PA (1988) pp. 733-742; Yamagata, T., et al., "Alloy Design for High Strength Nickel-Base Single Crystal Alloys", published in "Superalloys 1984" TMS-AIME Warrendale PA (1984) pp. 157-166. The amount of gamma prime, in weight percent, for the six preferred alloys according to the current invention is set forth in Table 1. As discussed above, the chromium content of these alloys remains within the desired level of about 14-16 percent so as to provide good hot corrosion resistance.

**TABLE 1**

| **MATERIAL** | **VOLUME FRACTION γ′** | **N**_{**v**} | **Δa (%)** |
|---|---|---|---|
| WSTC1 | 37.5 | 2.22 | 0.27 |
| WSTC2 | 45.0 | 2.21 | 0.19 |
| WSTC3 | 43.0 | 2.21 | 0.20 |
| WSTC4 | 49.0 | 2.37 | 0.05 |
| WSTC5 | 49.5 | 2.40 | 0.066 |
| WSTC6 | 55.5 | 2.44 | 0.12 |
| WSTC7 | 58.0 | 2.43 | 0.042 |

As a result of operation at elevated temperature, nickel-based alloys undergo microstructural changes. Such changes include gamma prime coarsening, which adversely affects the strength of the alloy, and the transformation of gamma prime into unwanted topologically close-packed secondary phases, such as plate or needle-like sigma, eta, etc. The formation of these plate-like phases adversely affects both strength and toughness. Consequently, in order to ensure that high strength and toughness are maintained for many thousands of hours of operation at elevated temperature, the composition of the strengthening elements must be carefully balanced so that the alloy has a certain degree of microstructural stability.

It is well known that the electron vacancy number Nᵥ is a measure of the microstructural stability of the alloy. The higher the value of Nᵥ, the greater the tendency for the formation of undesirable topologically close-packed secondary phases. However, as the level of strengthening elements in the composition, such as aluminum, titanium and tantalum, is increased, the Nᵥ value also increases. Thus, since it is desirable to maintain a low value of Nᵥ on one hand and to provide increased strength on the other, the level of strengthening elements included in the composition of the alloys must be controlled accordingly. The electron vacancy number of the alloys of the present invention is below 2.5, as shown in Table 1.

The alloys of the present invention are stable against sigma phase formation during long term exposure to high temperature since they exhibit Nᵥ values of less than 2.5. The sigma phase stability of the alloy is determined by the Nᵥ value of the residual gamma phase of the alloy structure, after the precipitation of the gamma prime phase. The stability of the alloy can then be assessed using the PHACOMP method set forth in Murphy, H.J., et al., "Phacomp Revisited", Journal of Metals, November 1968 pp. 46-53, or the Modified PHACOMP method set forth in Barrows, R.G. and Newkirk, J.B., "A Modified System for Predicting Sigma Formation", Metallurgical Transactions **3** (1972) pp. 2889-2893.

The single crystal alloys of the present invention are also stable against directional agglomeration of the gamma prime particles, commonly known as the rafting phenomenon, by virtue of having a minimal lattice misfit between the gamma and gamma prime phases. The alloys of the present invention have a lattice misfit less than or about equal to 0.2%, as shown in Table 1.

In the alloys according to the current invention, the amounts of aluminum, titanium, tantalum, niobium and molybdenum have been balanced so as to attain high strength when the alloy is single crystal cast, while maintaining good microstructural stability. Significantly, this result has been achieved without the need to reduce the chromium content. The amounts of molybdenum and tungsten are low in order to improve the hot corrosion resistance of the alloys. Some of the alloys contain niobium as an alternative to molybdenum and tungsten in order to further improve the hot corrosion resistance and allow control of the gamma/gamma prime structure while reducing the acid fluxing of the subsurface oxides that is promoted by MoO₃ and WO₃ during hot corrosion attack. Chromium, however, has been maintained in the range of 13.75% to 16.3%, so that adequate corrosion resistance is maintained. Moreover, as previously discussed, in the alloy according to the current invention, the elements are adjusted within the aforementioned ranges so that the electron vacancy number is maintained at no more than about 2.5, thereby ensuring that adequate microstructural stability is achieved.

As a result of the foregoing, the strength of the alloy according to the current invention when cast by a single crystal process is high, despite its relatively high chromium content. Significantly, good microstructural stability of the alloy according to the current invention has been achieved by considerably reducing the levels of niobium and molybdenum so that the amounts of aluminum and titanium can be increased without driving the electron vacancy number too high.

These alloys are suitable for casting as single crystals to produce high strength and corrosion resistant turbine blades for land-based gas turbine systems. The single crystal materials are formed by a single crystal casting process, solution treated at a sufficiently high temperature to chemically homogenize the alloy chemistry and finally heat treated to produce a strengthening array of gamma prime particles, these steps all being commonly known in the art. The resulting article exhibits high strength and good corrosion resistance and the absence of grain boundaries in the single crystal structure provides that the blade can perform effectively at the very high temperature regime.

## Claims

1. A gas turbine having a turbine blade made from an alloy characterized by the following elements, in weight percent, about:
Aluminum 3.4 - 4.0;
Titanium 3.0 - 4.7;
Tantalum 0.8 - 2.0;
Chromium 13.75 - 15.5;
Cobalt 8.0 - 8.5;
Niobium 0.0 - 1.0;
Tungsten 2.0 - 4.5;
Molybdenum 0.1 - 2.0;
Nickel Balance.

2. The gas turbine according to claim 1, wherein said alloy has an electron vacancy number of no more than about 2.5.

3. The gas turbine according to claim 1, wherein said blade comprises a single crystal micro-structure.

4. The gas turbine according to claim 1, wherein the alloy comprises the following elements, in weight percent, about:
Aluminum 3.9;
Titanium 3.1;
Tantalum 1.8;
Chromium 15.4;
Cobalt 8.3;
Niobium 0.0;
Tungsten 2.4;
Molybdenum 0.46;
Nickel Balance.

5. The gas turbine according to claim 1, wherein the alloy comprises the following elements, in weight percent, about:
Aluminum 3.4;
Titanium 4.5;
Tantalum 1.8;
Chromium 13.91;
Cobalt 8.3;
Niobium 0.46;
Tungsten 2.5;
Molybdenum 0.86;
Nickel Balance.

6. The gas turbine according to claim 1, wherein the alloy comprises the following elements, in weight percent, about:
Aluminum 3.9;
Titanium 3.1;
Tantalum 1.94;
Chromium 13.75;
Cobalt 8.3;
Niobium 0.45;
Tungsten 4.2;
Molybdenum 0.5;
Nickel Balance.

7. The gas turbine according to claim 1, wherein the alloy comprises the following elements, in weight percent, about:
Aluminum 3.5;
Titanium 4.6;
Tantalum 0.9;
Chromium 15.2;
Cobalt 8.3;
Niobium 0.9;
Tungsten 2.45;
Molybdenum 1.64;
Nickel Balance.

8. A gas turbine having a turbine blade made from an alloy characterized by the following elements, in weight percent, about:
Aluminum 4.7 - 5.3;
Titanium 1.8 - 3.0;
Chromium 15.2 - 16.3;
Cobalt 6.4 - 8.75;
Niobium 0.75 - 4.0;
Nickel Balance.

9. The gas turbine according to claim 8, wherein said alloy has an electron vacancy number of no more than about 2.5.

10. The gas turbine according to claim 8, wherein said blade comprises a single crystal micro-structure.

11. The gas turbine according to claim 8, wherein the alloy comprises the following elements, in weight percent, about:
Aluminum 5.16;
Titanium 2.54;
Chromium 15.83;
Cobalt 8.15;
Niobium 1.7;
Nickel Balance.

12. The gas turbine according to claim 8, wherein the alloy comprises the following elements, in weight percent, about:
Aluminum 5.0;
Titanium 2.25;
Chromium 15.75;
Cobalt 7.0;
Niobium 3.15;
Nickel Balance.

13. A gas turbine having a turbine blade made from an alloy comprising the following elements, in weight percent, about:
Aluminum 4.24;
Titanium 2.8;
Chromium 15.3;
Cobalt 4.6;
Niobium 3.02;
Tungsten 4.0;
Molybdenum 0.15;
Nickel Balance.

14. The gas turbine according to claim 13, wherein said blade comprises a single crystal micro-structure.
